# EUROPEAN PATENT APPLICATION

(11) **EP 4 570 052 A1**
(43) Date of publication of application: **18.06.2025**
(21) Application number: 24219513.9
(22) Date of filing: 12.12.2024
(51) Int. Cl.: A01D 41/127, A01D 41/14, A01D 45/02

(54) **SYSTEMS AND METHODS FOR CONTROLLING A CORN HEADER**

(30) Priority: 15.12.2023 US 202363610524 P
(71) Applicant: CNH Industrial America LLC, New Holland, PA 17557 (US)
(72) Inventor: MARTIN, Jethro, New Holland, 17557 (US); HUNT, Cory Douglas, New Holland, 17557 (US)
(74) Representative: CNH Industrial IP Department

(57) **Abstract**

A header for an agricultural system includes multiple row units distributed across a width of the header, one or more first sensors coupled to the header and configured to collect data indicative of a first detected set of multiple objects in an area proximate the header, one or more second sensors coupled to the header and configured to collect additional data indicative of a second detected set of the multiple objects impacting one or more components of the header. A controller is configured to receive the data from the one or more first sensors and the additional data from the one or more second sensors and process the data and the additional data to estimate a respective point of origin for each object in the first detected set and the second detected set of the multiple objects in the area proximate the header.

## Description

### BACKGROUND

The present disclosure generally relates to detection of airborne particles associated with operation of an agricultural header, and more particularly, to adjusting one or more operating parameters of the agricultural header based on the detection of airborne particles.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A harvester may be used to harvest crops, such as barley, beans, beets, carrots, corn, cotton, flax, oats, potatoes, rye, soybeans, wheat, or other plant crops. The harvester may include or be coupled to a header, which may be designed to efficiently harvest certain types of crops. For example, a corn header may be designed to efficiently harvest corn. In particular, the corn header may include row units that include components that operate to separate ears of corn from stalks as the harvester travels through a field. Conveyors (e.g., augers) carry the ears of corn toward processing machinery and/or storage compartments of the harvester, while the stalks are deposited back into the field.

### SUMMARY

Certain embodiments commensurate in scope with the originally claimed subject matter are summarized below. These embodiments are not intended to limit the scope of the claimed subject matter, but rather these embodiments are intended only to provide a brief summary of possible forms of the disclosure. Indeed, the disclosure may encompass a variety of forms that may be similar to or different from the embodiments set forth below.

In certain embodiments, a header for an agricultural system includes a plurality of row units distributed across a width of the header, one or more first sensors coupled to the header and configured to collect data indicative of a first detected set of a plurality of objects in an area proximate the header, one or more second sensors coupled to the header and configured to collect additional data indicative of a second detected set of the plurality of objects impacting one or more components of the header, and a controller comprising a memory and a processor. The controller is configured to receive the data from the one or more first sensors and the additional data from the one or more second sensors and process the data and the additional data to estimate a respective point of origin for each object in the first detected set and the second detected set of the plurality of objects in the area proximate the header.

In certain embodiments, a crop loss sensor system includes one or more first sensors coupled to a header and oriented such that a field of view of the one or more first sensors comprises an area above the header relative to a soil surface, wherein the one or more first sensors are configured to generate signals associated with a first detected set of a plurality of objects in the area, one or more second sensors coupled to the header, wherein the one or more second sensors are configured to generate additional signals indicative of a second detected set of the plurality of objects impacting one or more components of the header, and a controller comprising a processor and a memory. The controller is configured to receive the signals from the one or more first sensors and the additional signals from the one or more second sensors, and process the signals and the additional signals to determine a number of airborne particles in the area that correspond to one or more kernels dislodged from a respective crop, and estimate a respective point of origin for each of the number of airborne particles that correspond to the one or more kernels dislodged from the respective crop.

In certain embodiments, a method includes operating an agricultural system to harvest crop from a field using a header, receiving sensor data from a first set of sensors mounted on the header, wherein the sensor data is indicative of a first detected set of a plurality of objects within a field of view of the first set of sensors, and receiving additional sensor data from a second set of sensors mounted on the header, wherein the additional sensor data is indicative of a second detected set of the plurality of objects impacting one or more components of the header. The method further includes determining a number of the plurality of objects that correspond to airborne kernels of a crop based on the sensor data, the additional sensor data, or both, determining a respective point of origin for each object in the number of the plurality of objects that correspond to the airborne kernels of the crop, wherein the point of origin corresponds to a particular row unit of the header, determining whether the number of the plurality of objects that correspond to the airborne kernels of the crop and that is associated with the particular row unit exceeds a threshold number, and generating an output to individually control the particular row unit in response to the number of the plurality of objects that correspond to the airborne kernels of the crop and that is associated with the particular row unit exceeding the threshold number.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an agricultural system, in accordance with an embodiment of the present disclosure;
FIG. 2 is a perspective side view of a header that may be employed within the agricultural system of FIG. 1, in accordance with an embodiment of the present disclosure;
FIG. 3 is a perspective front view of a portion of the header of FIG. 2, in accordance with an embodiment of the present disclosure;
FIG. 4 is a front view of a crop being directed through a portion of the header of FIG. 2, in accordance with an embodiment of the present disclosure;
FIG. 5 is a schematic diagram of a portion of the header of FIG. 2 with a crop loss sensor system coupled thereto, in accordance with an embodiment of the present disclosure;
FIG. 6 is a schematic diagram of a portion of the header of FIG. 2, illustrating various sensors of the crop loss sensor system of FIG. 5, in accordance with an embodiment of the present disclosure; and
FIG. 7 is a flowchart of a method for adjusting one or more operating parameters of a header, such as the header of FIG. 2, based on sensor data received from the crop loss sensor system of FIG. 5, in accordance with an aspect of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

As used herein, the terms "approximately," "generally," "substantially," and so forth, are intended to convey that the property value being described may be within a relatively small range of the property value, as those of ordinary skill would understand. For example, when a property value is described as being "approximately" equal to (or, for example, "substantially similar" to) a given value, this is intended to convey that the property value may be within +/- 5%, within +/- 4%, within +/- 3%, within +/- 2%, within +/- 1%, or even closer, of the given value. Similarly, when a given feature is described as being "substantially parallel" to another feature, "generally perpendicular" to another feature, and so forth, this is intended to convey that the given feature is within +/- 5%, within +/- 4%, within +/- 3%, within +/- 2%, within +/- 1%, or even closer, to having the described nature, such as being parallel to another feature, being perpendicular to another feature, and so forth. Further, it should be understood that mathematical terms, such as "planar," "slope," "perpendicular," "parallel," and so forth are intended to encompass features of surfaces or elements as understood to one of ordinary skill in the relevant art, and should not be rigidly interpreted as might be understood in the mathematical arts. For example, two components having respective axes that are "parallel" with one another is intended to encompass the axes of the components extending substantially parallel to each other (e.g., within related tolerances) without definitively being mathematically parallel.

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may include or be coupled to a header to harvest crops within the field. The header may be a corn header that is designed to efficiently harvest corn within the field. The corn header may include multiple row units across a width of the corn header, and each row unit may include deck plates, stalk rollers, and/or other components that operate to separate ears of corn from stalks as the harvester travels through the field. Conveyors (e.g., augers) carry the ears of corn toward processing machinery and/or storage compartments of the harvester, while the stalks are deposited back into the field.

It is presently recognized that as crops impact the header or components thereof (e.g., deck plate), the force (e.g., energy) generated from the impact may dislodge particles (e.g., individual kernels) from the crop. In certain instances, the particles may be directed into the air and/or away from the header (e.g., as a result of the impact with the header components) such that those particles are lost before being directed toward the processing machinery and/or storage compartments of the harvester, thereby reducing the yield from a harvesting operation. As discussed herein, "butt-shelling" may refer to the process of individual kernels of a crop being directed into the air (e.g., airborne) and/or away from the header via engagement of the crop with one or more components of the header (e.g., deck plates, stalk rollers). In traditional systems, detection of butt-shelling may be difficult as airborne particles (e.g., individual kernels) have little-to-no predictable trajectory. Accordingly, it may be desirable to employ one or more sensors (e.g., one or more sets of sensors) to detect the presence of airborne particles proximate the header, such that adjustments may be made to one or more operating parameters of the header to reduce an amount of product lost due to impact with components of the header (e.g., reduce an amount of butt-shelling, reduce a rate of butt-shelling), thereby increasing the yield in a harvesting operation. Additionally, it may be desirable to employ one or more sensors to detect the presence of material other than grain (MOG) at a location proximate the header, such that adjustments may be made to one or more operating parameters of the header to reduce an amount of MOG from reaching the conveyors of the header, thereby further increasing the yield in a harvesting operation.

Accordingly, present embodiments relate generally to a crop loss sensor system. The crop loss sensor system may include one or more sets of sensors (e.g., radar sensors, motion sensors, vibration sensors, impact sensors, cameras) positioned on the header and/or proximate the header (e.g., on or proximate a component of the header), and the one or more sets of sensors may be configured to generate signals (e.g., data) indicative of one or more airborne particles within a threshold distance of the header during a harvesting operation and/or signals (e.g., data) indicative of MOG reaching various components of the header. Additionally, a control system may be configured to utilize the data collected by the one or more sets of sensors to estimate an origin of each airborne particle (e.g., estimate a particular row unit from which the airborne particle originated), thereby enabling the control system to individually control specific row units associated with an undesirable amount of butt-shelling (e.g., amount of butt-shelling exceeding a desired threshold). In this way, each row unit may be controlled individually to limit an amount of butt-shelling while maintaining efficient harvesting conditions.

For example, a first set of the one or more sets of sensors may be oriented and/or disposed on a frame of the header such that an area above the header relative to gravity and/or relative to the ground is monitored for airborne particles, and a second set of the one or more sets sensors may include individual sensors oriented and/or disposed on each row unit associated with the header (e.g., positioned proximate a deck plate of each row unit). As the first and second sets of sensors detect the data indicative of a number of airborne particles in the area proximate the header (e.g., indicative of an amount of butt-shelling), the data may be analyzed by the control system to determine an estimated origin of each of the airborne particles in the area proximate the header (e.g., determine a particular row unit from which each airborne particle originated over a first time period during the harvesting operation). Upon determining the estimated origin of each of the airborne particles, the control system may individually control each of the corresponding row units associated with one or more airborne particles, thereby reducing an amount of airborne particles in the air (e.g., over a second time period during the harvesting operation). For example, the crop loss sensor system may collect data indicating that a particular row unit is associated with an undesirable amount of butt-shelling, and the control system may receive the data and subsequently reduce a size of a gap between a pair of deck plates associated with the particular row unit. As another example, based on the collected data, the control system may reduce a speed at which a stalk roller associated with the particular row unit feeds plants through the header, thereby reducing an impact of the plant against the deck plates. In certain systems, the control system may individually control a chopper blade associated with the particular row unit such that a rate of rotation of the chopper blade is proportional to the stalk roller speed of the particular row unit. Further still, the control system may adjust an angle at which the particular row unit is oriented when a stalk roller speed associated with the particular row unit is adjusted. For example, upon reducing a speed of a stalk roller of a particular row unit, a corresponding change may be made to the angle at which the row unit is disposed such that the row unit is flattened relative to the ground, thereby enabling the row unit to process crop efficiently. Conversely, upon increasing the speed of the stalk roller of a particular row unit, the angle at which the row unit is disposed may be increased relative to the ground, thereby enabling the row unit to process the crop directed through the row unit. In these ways, a number of airborne particles lost as a result of butt-shelling may be reduced, thereby increasing yield and efficiency in a harvesting operation.

Additionally, one or more of the sensors may be configured to detect data indicative of MOG reaching certain components of the header, which may be undesirable. For example, one or more of the sensors may be positioned on each of the row units of the header, and the sensors may detect data indicative of a stalk of a plant reaching a rear portion of a pair of deck plates associated with a particular row unit (e.g., reaching a portion of a pair of deck plates proximate conveyors of the header). During harvesting operations, as stalk is directed into the conveyors of a header, the stalk may obstruct kernels of a crop from being processed through the conveyors efficiently. Accordingly, it may be desirable to detect when MOG is reaching a rear portion of a particular row unit such that a control system may modify one or more operating parameters of the header to decrease an amount of MOG from reaching the conveyors. For example, upon detecting that a portion of stalk is reaching a particular position on a row unit (e.g., reaching a position that is a threshold distance away from the conveyors), the control system may increase a speed at which the stalk rollers rotate such that the stalk is processed and deposited into the field prior to reaching the particular position on the row unit. In this way, the yield and efficiency of a harvesting operation may be improved.

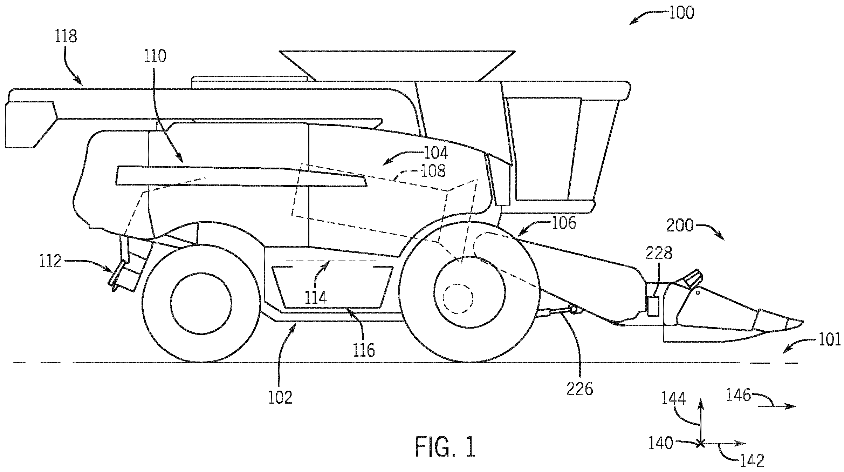

With the foregoing in mind, FIG. 1 is a side view of an embodiment of an agricultural system 100, which may be a harvester. The agricultural system 100 includes a chassis 102 configured to support a header 200 (e.g., corn header) and an agricultural crop processing system 104. The header 200 is configured to separate a portion of the crops (e.g., ears of corn) from stalks and to transport the portion of the crops toward an inlet 106 of the agricultural crop processing system 104 for further processing of the portion of the crops. The header 200 may also return other portions of the crops (e.g., material other than grain [MOG], such as stalks) to a field.

The agricultural crop processing system 104 receives the portion of the crops from the header 200 and separates desired crop material from crop residue. For example, the agricultural crop processing system 104 may include a thresher 108 having a cylindrical threshing rotor that transports the crops in a helical flow path through the agricultural system 100. In addition to transporting the crops, the thresher 108 may separate certain desired crop material (e.g., grain) from the crop residue, such as husks and pods, and may enable the desired crop material to flow into a cleaning system 114 (such as sieves) located beneath the thresher 108. The cleaning system 114 may remove debris from the desired crop material and transport the desired crop material to a storage tank 116 within the agricultural system 100. When the storage tank is full, a tractor with a trailer may pull alongside the agricultural system 100. The desired crop material collected in the storage tank 116 may be carried up by an elevator and dumped out of an unloader 118 into the trailer. The crop residue may be transported from the thresher 108 to a crop residue handling system 110, which may process (e.g., chop/shred) and remove the crop residue from the agricultural system 100 via a crop residue spreading system 112 positioned at an aft end of the agricultural system 100. To facilitate discussion, the header 200 may be described with reference to a lateral axis or direction 140, a longitudinal axis or direction 142, and a vertical axis or direction 144. The agricultural system 100 and/or its components may also be described with reference to a direction of travel 146.

In the illustrated embodiment, the agricultural system 100 may include one or more actuators configured to manipulate the spatial orientation and/or position of the header 200 with respect to the agricultural system chassis 102, and/or the spatial orientation of the header 200 with respect to the crop rows/ground/soil. For example, a header height actuator 226 may drive the header 200 to move along the direction 144 relative to a ground surface 101. The header 200 may be attached to the chassis 102 via a four bar linkage. The position of the four bar linkage may be manipulated by the header height actuator 226 to adjust the height of the header 200. The agricultural system 100 may also include a header orientation actuator 228. The header orientation actuator 228 may be configured to rotate the angular orientation of the header 200 (e.g., the entire header 200 or a portion thereof) relative to the ground surface 101. The actuators 226, 228 may be manipulated in response to one or more stimuli to adjust the agricultural system 100 based on one or more environmental variables (e.g., soil condition, terrain, crop damage). As discussed herein, a crop loss sensor system may include one or more sensors (e.g., motion sensors, radar sensors, vibration sensors) on the header 200, and the crop loss sensor system may receive and process signals generated by the one or more sensors to determine a number of airborne particles in the air proximate the header 200. In some embodiments, one or more operating parameters of the header 200 may be adjusted based on the number of airborne particles detected by the crop loss sensor system, as described in greater detail herein.

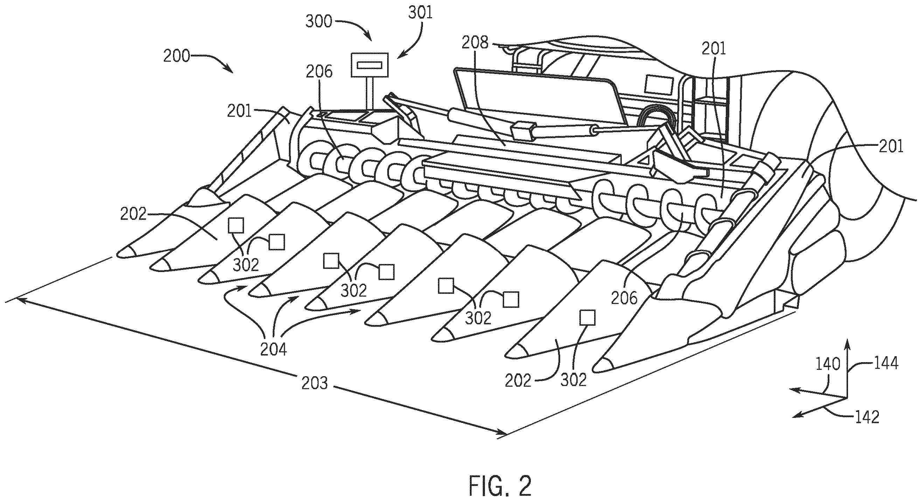

FIG. 2 is a perspective view of an embodiment of the header 200 that may be employed within the agricultural system 100 of FIG. 1. In the illustrated embodiment, the header 200 is a corn header and is supported by a frame 201, which may be coupled to the chassis 102. The header 200 includes multiple dividers 202 configured to divide rows of a crop (e.g., corn). The dividers 202 may be distributed across a width 203 of the header 200 (e.g., along the lateral axis 140). As the header 200 moves along a path, the dividers 202 may direct the crops from each row to one or more row units 204. The row units 204 are configured to separate a portion of each crop (e.g., an ear of corn) from a stalk, thereby separating the portion of each crop from the soil. The portion of the crop may be directed to one of a pair of conveyors 206 (e.g., augers) configured to convey the portion of the crop laterally inward along the lateral axis 140 to a center crop conveyor 208 at a center of the header 200, and the center crop conveyor 208 directs the portion of the crop toward the inlet of the agricultural crop processing system 104. As illustrated, the conveyors 206 extend along a substantial portion of the width 203 of the header 200 (e.g., along the lateral axis 140). The conveyors 206 may be driven by a drive mechanism (e.g., electric motor, hydraulic motor). The row units 204 may also chop and/or return other portions of the crops (e.g., MOG, such as stalks) to the field.

The header 200 may also include a crop loss sensor system having one or more sets of sensors coupled to one or more components of the header 200 (e.g., the frame 201, a divider 202, a row unit 204). For example, a crop loss sensor system 300 (CLSS 300) may include a first set of sensors 301 (e.g., one or more sensors 301) mounted to a portion of the header 200 (e.g., the frame 201), and each of one or more sensors 301 may be configured to generate data associated with one or more airborne particles (e.g., high density particles, kernels) that are dislodged from a respective crop and directed into an area proximate the header 200. Additionally, the CLSS 300 may include a second set of sensors 302 (e.g., one or more sensors 302) mounted to a different portion of the header 200 (e.g., mounted to a particular row unit 204) and each of the one or more sensors 302 may also be configured to generate data associated with one or more airborne particles directed into an area proximate the header 200. Additionally, the one or more sensors 302 may be configured to detect MOG impacting portions of the header 200, as described in greater detail below.

In certain embodiments, the one or more sensors 301, 302 of the CLSS 300 may include radar sensors, motion sensors, impact sensors, camera sensors, and/or any other suitable type of sensors. The sensors 301, 302 of the CLSS 300 may be positioned at various locations about the header 200, and/or oriented in various directions, thereby enabling the CLSS 300 to capture data indicative of one or more airborne particles within an area proximate the header 200 and/or data indicative of inefficient harvesting operations (e.g., data indicative of crop being directed toward the ground instead of being directed toward the conveyor, data indicative of butt-shelling, data indicative of a stalk associated with a crop being directed toward the conveyor). For example, in certain embodiments, one or more of the sensors 301, 302 may be oriented and/or angled in a direction along the longitudinal axis 142 (e.g., parallel to the ground surface 101), angled away from the ground surface 101 in a direction between the longitudinal axis 142 and the vertical axis 144, angled toward the ground surface 101, angled in a direction along the vertical axis 144 (e.g., positioned below a component of the header and angled in an upward direction), or a combination thereof.

In this way, as the header 200 performs inefficient harvesting operations (e.g., as airborne particles are directed off of the header 200 and into the air and/or toward the ground, as stalks associated with a crop are directed toward the conveyor 206, as crops are directed through deck plates of a particular row unit 204), the one or more sensors 301, 302 of the CLSS 300 may detect the presence of such inefficient harvesting operations, thereby enabling a control system to determine an appropriate output to increase harvesting efficiency (e.g., limit the number of airborne particles in the air, limit amount of stalk from reaching the conveyor 206, limit the amount of crop not captured by the header 200). For example, the CLSS 300 may be communicatively coupled to a controller (e.g., electronic controller) that receives and processes the signals indicative of the inefficient harvesting operations (e.g., indicative of a number of airborne particles) to determine an estimated origin of each of the airborne particles (e.g., particular row unit 204 from which the airborne particles originated) and/or whether a number of airborne particles in the air (e.g., in an area proximate the header 200) and associated with a particular point of origin (e.g., particular row unit 204) exceeds a threshold number of particles over a period of time (e.g., greater than 100 kernels detected over 10 minute span).

In response to determining that the number of airborne particles associated with a particular row unit 204 exceeds the threshold, the controller may generate an appropriate output (e.g., individually control the row unit 204 associated with the undesirable amount of airborne particles) to reduce a number of particles in the air as harvesting operations continue, as described in greater detail herein. Similarly, in response to determining that an amount of stalk reaching the conveyor 206 exceeds a specified threshold, the controller may generate an appropriate output to reduce the amount of stalk reaching the conveyor 206 as harvesting operations continue. As discussed herein, "inefficient harvesting operations" may refer to harvesting operations in which a number of airborne particles in the air and/or associated with a particular row unit 204 exceeds a threshold amount, harvesting operations in which an amount of stalk reaching the conveyor 206 exceeds a threshold amount, and/or harvesting operations in which an amount of product lost and/or not collected by the header 200 exceeds a threshold amount.

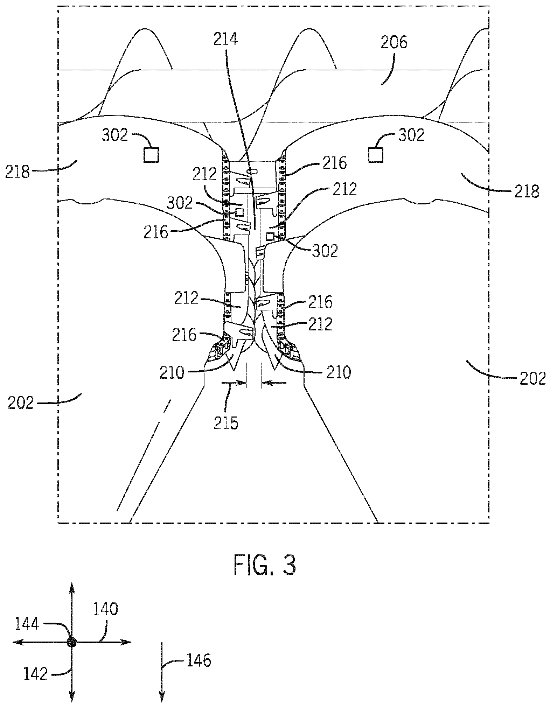

FIG. 3 is a perspective view of an embodiment of a portion of the header 200. As shown, the portion of the header 200 includes the multiple dividers 202 that direct the crops to one or more row units 204. Each row unit 204 may be disposed and/or oriented at an angle relative to a ground surface over which the header 200 travels and each row unit 204 includes various components that operate to separate a portion of the crop (e.g., ear of corn; desirable crop material) from the stalk, carry the portion of the crop (e.g., ear of corn; desirable crop material) toward the conveyors 206, and return the stalk to the field. For example, each row unit 204 may include a pair of stalk rollers 210 that are configured to grip the stalks and rotate in opposite directions to push the stalks in a direction toward the field (e.g., vertically downward direction along the vertical axis 144; below the header 200). The stalk rollers 210 may be configured to operate (e.g., rotate) at a particular speed to direct the stalks towards the field. In some embodiments, the speed at which the stalk rollers 210 rotate may be adjusted (e.g., via an actuator) based on data received from the CLSS 300, as described in greater detail herein. Additionally, in certain embodiments, upon adjusting the speed at which the stalk rollers 210 rotate, the angle at which the row units 204 are disposed may be correspondingly adjusted. For example, upon decreasing the speed of the stalk rollers 210, the angle at which the row units 204 are oriented relative to the ground may also be decreased (e.g., via an actuator coupled to one or more of the row units 204). Conversely, upon increasing the speed of the stalk rollers 210, the angle at which the row units 204 are oriented relative to the ground may also be increased (e.g., via an actuator coupled to one or more of the row units 204).

Each row unit 204 also includes a pair of deck plates 212 that are positioned over (e.g., above) the pair of stalk rollers 210 relative to the vertical axis 144. Each deck plate 212 extends from a first end to a second end along the longitudinal axis 142, and the pair of deck plates 212 are separated from one another along the lateral axis 140 to define a gap 214. Further, each row unit 204 may include a pair of chains 216 (e.g., with lugs) that are configured to drive or push the portion of the crop (e.g., ear of corn; desirable crop material) along the pair of deck plates 212 toward the conveyor(s) 206. The pair of deck plates 212 are spaced apart so that a width 215 of the gap 214 is sized to enable the stalks to be pulled through the gap 214, but to block the portion of the crop (e.g., ears of corn; desirable crop material) from falling through the gap 214. In some embodiments, the pair of deck plates 212 are adjustable and may be driven (e.g., via an actuator) toward and away from one another along the lateral axis 140 to change the width 215 of the gap 214, as described in greater detail herein. A hood 218 is positioned rearward of each divider 202 relative to the direction of travel 146 and between adjacent row units 204 to cover various components, such as the actuator that drives the pair of deck plates 212, linkages, and so forth.

As noted herein, for good harvesting performance, the portion of the crop (e.g., ear of corn; desirable crop material) should make initial contact with the pair deck plates 212 toward a forward portion of the pair of deck plates 212 relative to the longitudinal axis 142 or the forward direction of travel 146 of the header 200. This may enable the portion of the crop to separate from its stalk such that the stalks can be completely discharged from the header 200 before reaching a rear portion of the pair of deck plates 212, thereby reducing a likelihood of the stalks being fed into the conveyors 206. Additionally, the width 215 of the gap 214 should be sized such that the stalks of the crop may pass through the gap 214 while the portion of the crop (e.g., ear of corn; desirable crop material) is prevented or blocked from passing through the gap 214. For example, if the width 215 of the gap 214 is too large, both the stalk and the portion of the crop may pass through the gap 214 and may be discharged from the header 200 before being directed to the conveyor 206, thereby resulting in product loss (e.g., loss of the desirable crop material).

In other cases, the width 215 of the gap 214 may be sized such that butt-shelling occurs. For example, as noted herein, butt-shelling may refer to individual kernels or particles of a crop being dislodged from the crop as the crop strikes or engages with the pair of deck plates 212. The butt-shelling may be a result of, and/or may be affected by, a velocity at which the crop strikes the pair of deck plates 212 (e.g., speed at which the stalk rollers 210 rotate and/or move the crop toward the deck plates 212) and/or an angle at which the row units 204 are oriented. However, in some cases, butt-shelling may occur when the width 215 of the gap 214 is sized such that only a portion of the desirable crop material may pass through the gap 214 without interference, while different portions of the desirable crop material engage with the pair of deck plates 212. Thus, a variety of operational and/or structural factors, such as a ground speed of the header, a rotational rate of the pair of stalk rollers 210, an angle at which a row unit 204 is disposed, and/or the width 215 of the gap 214 between the pair of deck plates 212 (e.g., relative to a size of the portion of the crop), may cause butt-shelling and/or affect a rate of butt-shelling.

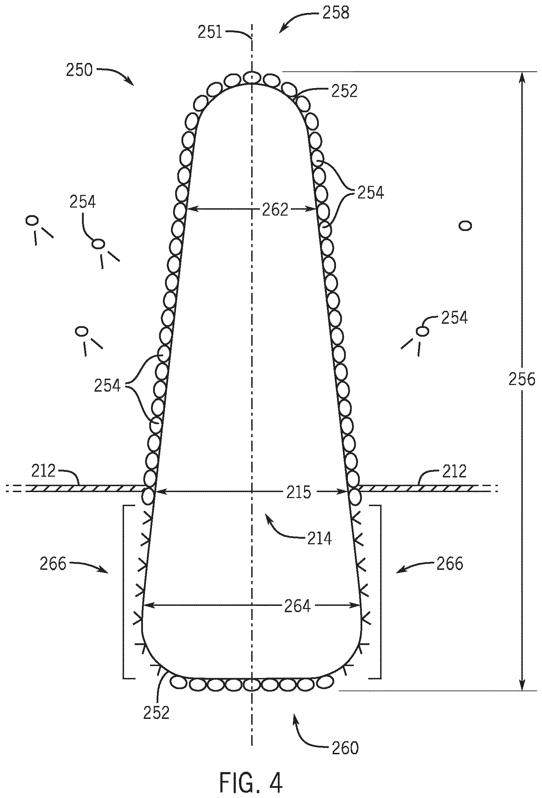

For example, FIG. 4 shows an example of a portion of a crop 250 (e.g., corn cob, ear of corn, desirable crop material) having a core 252 and multiple kernels 254 extending radially outward from the core 252 relative to a central axis 251 of the portion of the crop 250. The portion of the crop 250 may not be uniform in shape and thus may have multiple different diameters along a length 256 of the portion of the crop 250. For example, in some embodiments, the portion of the crop 250 may have a conical shape. Generally, the diameter of the portion of the crop 250 may progressively increase from an apex 258 of the portion of the crop 250 to a base 260 of the portion of the crop 250. For example, the portion of the crop 250 may have a first diameter 262 at or near the apex 258 of the portion of the crop 250 and a second diameter 264 at or near the base 260 of the portion of the crop 250. As illustrated, the second diameter 264 is greater than the first diameter 262. Further, the first diameter 262 may be less than the width 215 of the gap 214 such that the core 252 and the kernels 254 of the portion of the crop 250 near the apex 258 are able to pass through the gap 214, while the second diameter 264 of the portion of the crop 250 near the base 260 may be greater than the width 215 of the gap 214 such that the core 252 may pass through the gap 214 while the kernels 254 are limited or blocked from passing through the gap 214 by the pair of deck plates 212 (e.g., engage with the deck plates 212). As the stalk rollers 210 direct the stalk and the crop 250 towards the pair of deck plates 212, one or more lateral sides of the portion of the crop 250 may strike one or both of the deck plates 212 and one or more kernels 254 may be dislodged (e.g., sheared) from the core 252 due to engagement of the kernels 254 with one and/or both of the deck plates 212. In turn, the kernels 254 dislodged from the core 252 may be directed into the air, thereby resulting in one or more bare sections 266 on the portion of the crop 250, which may be undesirable. Indeed, as kernels 254 are dislodged from the portion of the crop 250, the kernels 254 may be directed into the air with a sufficient velocity that enables the kernels 254 to escape (e.g., not be caught) by the header 200, thereby resulting in yield loss.

Returning to FIG. 3, if the width 215 of the gap 214 is too small, the stalk may be prevented from passing through the gap 214, and thus the stalk may also be directed toward the conveyor 206, which may be undesirable. Accordingly, the width 215 of the gap 214 may be adjusted such that the stalk may pass through the gap 214, the portion of the crop may be blocked from passing through the gap 214, and an amount of butt-shelling may be limited (e.g., controlled, reduced), as described in greater detail herein. Another factor for good harvesting performance is the speed at which the pair of stalk rollers 210 direct the stalk and the portion of the crop towards the pair of deck plates 212. For example, if the speed of the pair of stalk rollers 210 is too high (e.g., too fast), the impact force from the portion of the crop striking the pair of deck plates 212 as the stalk is directed through the gap 214 may be sufficient to cause kernels to dislodge from the portion of the crop (e.g., butt-shelling). However, if the speed of the pair of stalk rollers 210 is too low (e.g., too slow), reduced efficiency associated with harvesting a field may occur, thereby resulting in increased costs (e.g., more gas, more time for operators to harvest a field) associated with harvesting (e.g., fuel costs increase as equipment is running for longer amount of time, an amount of time that a farmer spends on a harvester may be increased, thereby resulting in less time to perform other harvesting operations). For example, if the speed of the pair of stalk rollers 210 is too low, an increased amount of stalk may reach a rear portion of the deck plates 212 and may be fed into the conveyor 206, which may be undesirable. Accordingly, it may be desirable to operate the pair of stalk rollers 210 at a target speed (e.g., speed or speed range) that limits an amount of butt-shelling and/or an amount of stalk from reaching the conveyor 206, while still enabling an operator to efficiently perform a harvesting operation.

Another factor for good harvesting performance is the angle at which each row unit 204 is disposed relative to the ground. As discussed herein "an attack angle" may refer to the angle at which each row unit 204 is disposed. In certain embodiments, it may be desirable to proportionally control the attack angle of each row unit 204 based on the rotation rate and/or speed at which the stalk rollers 210 are operated. For example, upon decreasing a speed of the stalk rollers 212, the attack angle of a particular row unit 204 may be proportionally decreased such that the row unit 204 is oriented flatter relative to the ground. Conversely, upon increasing a speed of the stalk rollers 212, the attack angle of a particular row unit 204 may be proportionally increased such that the row unit 204 is oriented away from the ground. Such adjustments may be made in real time based on adjustments to the speed at which the stalk rollers 212 rotate. In this way, improved harvesting efficiency may be enabled.

As noted herein, the header 200 may include the CLSS 300 having the one or more sets of sensors 301, 302 mounted on (e.g., coupled to) the header 200, and the CLSS 300 may receive and process signals generated by the one or more sets of sensors 301, 302 to identify an estimated origin of each of the one or more particles, a number of airborne particles (e.g., kernels) associated with a particular point of origin (e.g., associated with a particular row unit 204), and/or an amount of stalk reaching an area proximate the conveyor 206. The CLSS 300 may include a controller (e.g., electronic controller) that receives and processes the signals, filters out unwanted objects and/or noise, identifies a number of particles associated with a particular point of origin and/or an amount of MOG reaching an area proximate the conveyor 206, and then generates an appropriate output (e.g., in response to the number of particles associated with a particular row unit 204 exceeding a threshold number of particles, in response to an amount of MOG reaching an area proximate the conveyor 206 exceeding a threshold amount). In some embodiments, the appropriate output may include control signals, such as individual control signals to each of the one or more row units 204 associated with an undesirable amount of product loss (e.g., an identified row unit 204 having a number of lost particles exceeding a threshold number of particles) and/or an undesirable amount of MOG reaching an area proximate the conveyor 206 (e.g., an identified row unit 204 having an amount of MOG proximate the conveyor 206 that exceeds a threshold amount). For example, the controller may adjust a size of the gap 214 of an individual row unit 204, adjust a rotation rate of the pair of stalk rollers 210 of an individual row unit 204, and/or adjust an attack angle of an individual row unit 204. That is, in response to determining that a number of lost particles corresponding to pieces of a crop (e.g., kernels) and associated with a particular row unit 204 exceeds a threshold number of particles and/or in response to determining that an amount of MOG reaching an area proximate the conveyor 206 exceeds a threshold amount, the controller may send a control signal to adjust the width 215 of the gap 214 of the particular row unit 204, to adjust the rotation rate of the pair of stalk rollers 210 of the particular row unit 204, and/or adjust the attack angle of the particular row unit 204, thereby resulting in a reduced number of airborne and/or lost particles associated with the particular row unit 204. In some embodiments, the appropriate output may include providing a control signal to reduce a ground speed of the header 200. In some embodiments, the appropriate output may include a visual alarm (e.g., presented via a display screen in a cab of the agricultural system; text message with an explanation and/or a recommended adjustment to the width 215 of the gap 214 and/or adjustment to the rotation rate of the stalk rollers 210) and/or an audible alarm (e.g., presented via a speaker in the cab of the agricultural system).

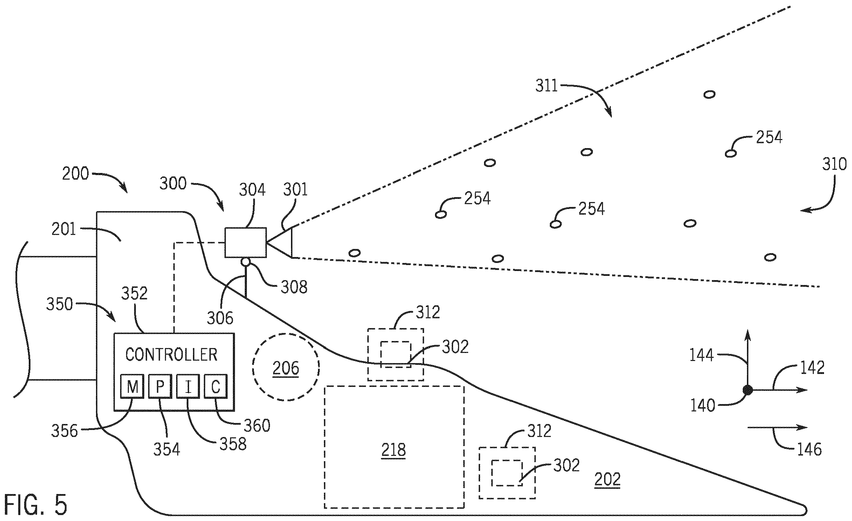

FIG. 5 is a schematic diagram of an embodiment of a portion of the header 200 with the sensors 301, 302 of the CLSS 300 mounted thereto. In certain embodiments, each of the sensors 301 may include a housing 304 configured to house the one or more sensors 301, and the housing 304 may be mounted to a portion of the frame 201 of the header 200 via an arm 306 (e.g., telescoping arm; adjustable arm). However, it should be appreciated that the housing 304 with the one or more sensors 301 may be coupled to another portion of the agricultural system, such as a portion of the chassis supported over wheel or tracks (e.g., above a cab that support an operator). In some embodiments, the arm 306 may be coupled to the CLSS 300 via one or more joints 308. As noted above, the one or more sensors 301 may be radar sensors configured to detect high-density, airborne particles in an area proximate the header 200. For example, the one or more sensors 301 may be oriented parallel to the lateral axis 140 and/or the longitudinal axis 142 (e.g., parallel relative to the ground surface 101) such that the one or more sensors 301 capture data associated with airborne particles in an area 310 proximate the header 200 and/or the dividers 202 relative to the vertical axis 144. That is, in certain embodiments, the one or more sensors 301 may be oriented in a direction (e.g., horizontal direction) substantially parallel to the ground surface 101 such that a field of view 311 of the one or more sensors 301 is above the header 200. Further, in certain embodiments, the one or more sensors 301 may be oriented in an upward direction away from the dividers 202 and the ground surface 101 at an angle relative to the longitudinal axis 142. Further still, in certain embodiments, the one or more sensors 301 may be oriented in a downward direction toward the dividers 202 and the ground surface 101 at an angle relative to the longitudinal axis 142. In this way, the one or more sensors 301 may capture data indicative of airborne particles in the area 310 proximate the header 200 (e.g., in the field of view 311 of the one or more sensors 301).

In certain embodiments, the position and/or orientation of the sensors 301 of the CLSS 300 may be adjusted via the arm 306 and the one or more joints 308. For example, the arm 306 may be configured to translate along the vertical axis 144 such that a position (e.g., height) of the sensors 301 of the CLSS 300 relative to the vertical axis 144 may be adjusted, and thus, a field of view of the one or more sensors 301 relative to the header 200 may be adjusted (e.g., to enable the one or more sensors to detect the airborne particles over a different area or zone relative to the header 200). Further, the one or more joints 308 may be configured to enable the sensors 301 of the CLSS 300 to rotate about one or more axes such that an angle of the one or more sensors 301 relative to the header 200 may be adjusted and/or a field of view of the one or more sensors 301 relative to the header 200 may be adjusted. For example, the joint(s) 308 may enable the sensors 301 of the CLSS 300 to rotate about the vertical axis 144 to change a field of view of the one or more sensors 301 across the width of the header 200. In certain embodiments, the joint(s) 308 may additionally or alternatively enable the sensors 301 of the CLSS 300 to rotate about the lateral axis 140 to change a field of view of the one or more sensors 301. In this way, the area 310 monitored by the CLSS 300 may be adjusted, as described in greater detail herein. It should be noted that while only one sensor 301 is illustrated, the APSS 300 may include any number of sensors 301 (e.g., two, three, four, five, or more) housed in respective housings 304 and capable of capturing data indicative of airborne particles in the area 310 proximate the header 200.

Additionally, the CLSS 300 may include the one or more sensors 302 configured to collect data indicative of product loss and/or data indicative of MOG impacting components of the header 200. In certain embodiments, each row unit 204 of the header 200 may include one or more of the sensors 302, and the sensors 302 may correspond to impact sensors configured to detect crop (or a portion thereof) impacting the header (e.g., deck plates 212 of a particular row unit 204). In certain embodiments, each of the sensors 302 may include a housing 312 configured to house a respective sensor 302, and the housing 312 may be mounted to a portion of each row unit 204 employed by the header 200. In the illustrated embodiment, each row unit 204 includes a first sensor 302 mounted to a deck plate 212 of the row unit 204, and a second sensor 302 mounted to a hood 218 of the row unit 204 proximate the conveyor 206. However, it should be appreciated that the location and/or position of each of the sensors 302 is not limited to the illustrated embodiment. For example, in certain embodiments, each row unit 204 may include one or more sensors 302 positioned on the deck plates 212 upstream and/or downstream of the illustrated position relative to the direction of travel 146 of the header 200, one or more sensors 302 positioned on the dividers 202, or any combination thereof.

As noted above, the one or more sensors 302 may be impact sensors configured to detect high-density particles and/or MOG impacting the row units 204. Thus, in certain embodiments, the sensors 302 may be positioned on the deck plates 212 of a particular row unit 204 and may be oriented in a direction (e.g., vertical direction) along the vertical axis 144. Further, in certain embodiments, each row unit 204 may employ more than one of the sensors 302 and each of the sensors 302 employed by a particular row unit 204 may be oriented and/or positioned in different directions and/or on different components of the row unit 204. For example, in certain embodiments, a first sensor 302 may be positioned on a deck plate 212 of a row unit 204 while a second sensor 302 may be positioned on a hood 218 of the row unit 204, thereby enabling the sensors 302 to detect particles impacting various portions of the row unit 204 of the header 200. Further, in certain embodiments, a first sensor 302 may be positioned on an upstream portion of the deck plates 212 relative to the direction of travel 146, and a second sensor 302 may be positioned on a downstream portion of the deck plates 212 relative to the direction of travel 146 (e.g., proximate to the conveyor 206). It should be noted that while each row unit 204 is described above as having a sensor 302, in certain embodiments, one or more of the sensors 302 may be shared amongst adjacent row units 204. For example, in certain embodiments, a single sensor 302 may be configured to detect high-density particles and/or MOG impacting a particular row unit 204, and the data collected by the sensor 302 may be utilized to estimate a number of particles impacting row units 204 adjacent to the row unit 204 having the sensor 302. In this way, the one or more sensors 302 may also capture data indicative of airborne particles impacting the header 200 (e.g., impacting certain row units 204 of the header 200).

As noted above, the CLSS 300 may be communicatively coupled to a control system 350 configured to control operation of at least portions of the agricultural system 100 (e.g., control one or more components of the header 200) based on data received from the sensors 301, 302 of the CLSS 300. The control system 350 may include a controller 352 having one or more processors 354, a memory 356, and communication circuitry 360 configured to communicate with the sensors 301, 302, the arm 306, the joints 308, the pair of deck plates 212 associated with a particular row unit 204, the pair of stalk rollers 212 associated with a particular row unit 204, and/or other components of the header 200 (e.g., actuator coupled to each row unit 204 and configured to adjust an angle of attack of a particular row unit 204). The controller 352 may communicate with the sensors 301, 302 and/or other components of the header 200 over any suitable wired or wireless (e.g., radio or light based) network that may facilitate communication of data between systems, devices, and/or equipment. In some embodiments, the network may be a Wi-Fi network, a light detection and ranging (LIDAR) network, a 4G network, a 4G LTE network, a 5G network, a Bluetooth network, a Near Field Communication (NFC) network, or any suitable network for communicating information between devices.

In certain embodiments, the controller 352 may include or be configured to communicate with an output device, such as a display screen in a cab of the agricultural system and/or a speaker in the cab of the agricultural system. This may enable the controller 352 to provide the visual and/or audible alarms based on the signals from the sensors 301, 302. It should be appreciated that the output device may also operate an input device (e.g., touchscreen) that enables the operator to provide inputs to the controller 352 (e.g., to set and/or to adjust the threshold that represents undesirable butt-shelling/triggers adjustments to the header 200). In some embodiments, the controller 352 may be configured to communicate with a portable computing device, which may be a portable handheld device used by an operator to facilitate operation of the agricultural system 100. In certain embodiments, the portable computing device includes a smart phone, a tablet computer, a laptop computer, or another portable computer having a user interface (e.g., an electronic display with a graphical user interface). For example, the controller 352 may send instructions to provide the visual and/or audible alarms and/or notifications to the personal computing device based on the signals generated by the sensors 301, 302.

In some embodiments, the controller 352 may be configured to receive inputs and/or instructions from the output device and/or portable computing device, such as inputs and/or instructions to adjust one or more operating parameters of the header 200. For example, an operator may view information derived from the signals from the sensors 301, 302 (e.g., a number of particles or some indication of this, such as a notification that the number of particles in the area 310 above the header 200 exceeds a threshold number, a notification that the number of airborne particles associated with a particular row unit 204 exceeds a threshold number, a notification that an amount of MOG reaching the conveyor 206 exceeds a threshold amount), and the operator may provide an input that instructs and/or approves the controller 352 to adjust one or more of the operating parameters of the header 200, as described in greater detail herein.

It should be appreciated that the process of monitoring the particles and controlling the one or more operation parameters of the header 200 may be automated and carried out without operator input (e.g., the display screen may present the information for visualization by the operator, but the controller 352 proceeds to adjust the one or more operating parameters of the header 200 without the input from the operator). As the header 200 harvests crops, the controller 352 may be configured to receive sensor feedback from the sensors 301, 302 indicative of an origin of each of the airborne particles (e.g., particular row unit 204 from which the airborne particles originated) and/or a number of airborne particles in the area 310 proximate the header 200 and associated with a particular row unit 204 to identify when a number of airborne particles associated with a particular row unit 204 exceeds the threshold, such that adjustments may be made to the operating parameters of the header 200. Similarly, the controller 352 may be configured to receive sensor feedback from the sensors 302 indicative of an amount of MOG reaching the conveyors 206 and/or impacting the deck plates 212 within a threshold distance of the conveyor 206, such that adjustments may be made to the operating parameters of the header 200.

In some embodiments, the controller 352 may include one or more machine learning or artificial intelligence models having software configured to process and analyze the data generated by the sensors 301, 302 of the CLSS 300. Using the machine learning models, artificial intelligence, modeled data, historical data, and/or empirical data, the controller 352 may determine that certain operating parameters (e.g., certain width 215 of the gap 214, certain speed of the pair of stalk rollers 210, certain angle of attack of a particular row unit 204) are associated with increased amounts of butt-shelling and/or undesirable amounts of MOG reaching the conveyor 206. Accordingly, the controller 352 may determine to avoid such operating parameters, thereby reducing an amount of butt-shelling that may occur during operation of the header 200 and/or reducing an amount of MOG from reaching the conveyor 206. Similarly, the controller 352 may determine that certain other operating parameters (e.g., other width 215 of the gap 214, certain other speed of the pair of stalk rollers 210, other angle of attack of the row units 204) are associated with decreased amounts of butt-shelling and/or decreased amounts of MOG reaching the conveyor 206. The butt-shelling and/or amount of MOG reaching the conveyor 206 may also be affected by the ground speed and/or characteristics of the crop (e.g., the width of the desirable crop material), and thus, the controller 352 (and the algorithms utilized by the controller) may take multiple factors into consideration to make the adjustment(s) as the header 200 travels through the field to carry out harvesting operations. It should be noted that in some embodiments, the control system 350 may be located remotely from the CLSS 300, and the sensors 301, 302 may be configured to communicate data in real-time to the control system 350 across any suitable network.

In certain embodiments, the controller 352 may also be configured to filter out or screen data that is not indicative of airborne kernels directed off of the pair of deck plates 212 and into the area 310 proximate the header 200. For example, the sensors 301 may be one or more radar sensors configured to detect a distance, velocity, and/or direction of travel of an object within the field of view of the one or more sensors 301. Using this data, the CLSS 300 may estimate a point of origin (e.g., particular row unit 204 from which the object originated) for each object within the filed of view of the one or more sensors 301. During operation, the agricultural system 100, and thus the header 200, may traverse a field to harvest the crop at a particular speed (e.g., 5 kilometers per hour). Accordingly, the CLSS 300 (via the controller 352) may filter out any objects detected by the one or more sensors 301 that are moving through the field of view of the one or more sensors 301 at a speed that has less than a threshold deviation (e.g., less than 2 kilometers per hour of deviation) from the ground speed of the agricultural system 100. For example, if the agricultural system 100 is moving at 5 kilometers per hour, the controller 352 may filter out any objects detected by the one or more sensors 301 that are determined to be moving through the field of view of the one or more sensors 301 at a speed between 3 and 7 kilometers per hour, as such objects may be associated with the field that is being harvested and may not be indicative of airborne particles in the area 310 proximate the header 200. The controller 352 may receive and/or access the ground speed of the agricultural system 100 via any suitable source or technique (e.g., speed control signals; a drive system for the agricultural system 100).

In some embodiments, the controller 352 may determine a speed of the header 200 based on a speed at which stalks in front of the header 200 are approaching. For example, the speed at which the stalks in the field are approaching the header 200 may be indicative of the ground speed of the header 200, such that objects moving through the field of view of the one or more sensors 301 at a similar speed or within some margin of the speed at which the stalks are approaching may be ignored (e.g., filtered, screened). Similarly, because the one or more sensors 301 are mounted to the header 200, objects (e.g., even kernels still attached to the ears of corn on the header 200) in the field of view that have a relative speed of zero or near zero kilometers per hour may be indicative of objects on the header 200, and as such, the controller 352 may filter out such objects. In some embodiments, the velocity (e.g., vector, direction and speed) of a particular object may be indicative of an estimated point of origin of the airborne particle such that an associated row unit may be identified as the point of origin for the particular object. For example, depending on the velocity of an object (e.g., kernel), the controller 352 may be able to determine which row unit 204 the kernel came from.

The one or more sensors 301 may also be configured to detect a size of respective objects captured by the one or more sensors 301. Accordingly, the controller 352 may include instructions associated with filtering out objects that are less than a threshold size and/or greater than a threshold size such that objects having a range of sizes that correspond to an average size of a corn kernel may be recorded. For example, a size of an average corn kernel may be between 10 millimeters (mm) and 20 mm. Accordingly, the controller 352 may filter out objects having sizes that do not fall within the range of 10-20 mm as such objects are likely not associated with airborne kernels. By filtering the data discussed herein, data collected by the one or more sensors 301 may be indicative of a number of airborne particles derived from the crop (e.g., the desirable crop material) in the area 310 proximate the header 200, such that the controller 352 may control one or more operating parameters of the header 200 based on the detected number of airborne particles.

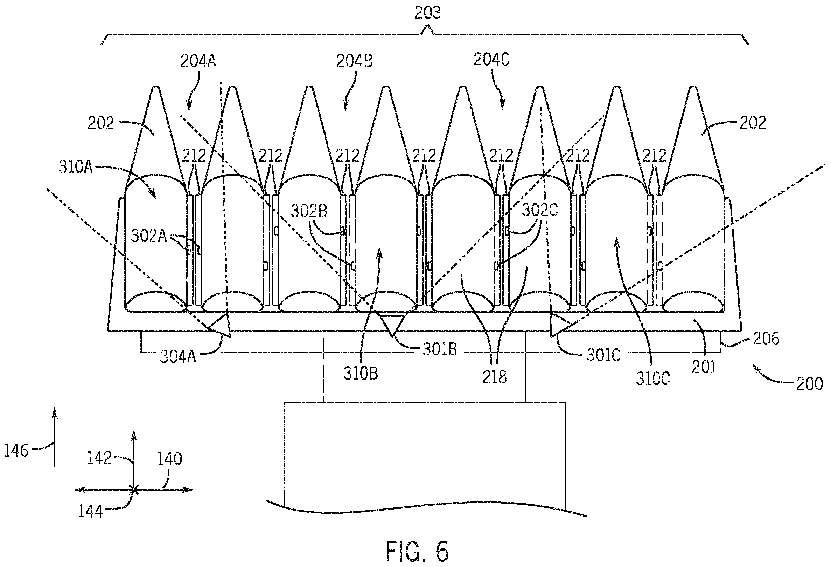

FIG. 6 is a perspective view of an embodiment of the header 200 having multiple sensors 301 of the CLSS 300 mounted to the frame 201 of the header 200, and multiple sensors 302 mounted to respective row units 204 (e.g., mounted to deck plates 212 of a respective row unit 204). As noted above, the CLSS 300 may include multiple sensors 301 configured to generate data indicative of a number of airborne particles in the area 310 proximate the header 200 (e.g., capture data indicative of an amount of butt-shelling) and multiple sensors 302 configured to generate data indicative of one or more particles and/or MOG impacting a portion of a particular row unit 204. As illustrated, each of the sensors 301 may be configured to detect airborne particles in a specific region associated with the header 200. For example, a first sensor 301A may be configured to detect airborne particles in a first region 310A, a second sensor 301B may be configured to detect airborne particles in a second region 310B, and a third sensor 301C may be configured to detect airborne particles in a third region 310C. Similar to the area 310 discussed above, each of the regions 310A, 310B, 310C may correspond to a region that is positioned above the header 200 relative to the vertical axis 144. That is, each of the sensors 301A, 301B, 301C may be oriented parallel to the ground surface 101 such that the sensors 301A, 301B, 301C are not directed toward the header 200. In certain embodiments, the sensors 301A, 301B, 301C may be oriented away from the header 200 at an angle relative to the longitudinal axis 142 such that the sensors 301 detect airborne particles in regions proximate to and above the header 200 (e.g., only above the header 200, the header 200 is outside of the field of view of the sensors 301, which may reduce interference due to a presence of metallic components on the header 200 and/or may reduce processing/filtering steps to identify the airborne particles in the field of view of the one or more sensors 301) relative to the vertical axis 144. Further, as noted above, a respective height of each of the sensors 301 may be adjusted via the arm 306 such that the sensors 301 may detect airborne particles at different heights relative to the vertical axis 144. For example, the sensor 301A may be set at a height 30 centimeters (cm) above the header 200 and oriented parallel with the longitudinal axis 142 and/or away from the header 200 at an angle relative to the longitudinal axis 142, while the sensor 301B may be set at a height 90 centimeters above the header 200. Additionally, in some embodiments, each of the sensors 301A, 301B, 301C may be rotatable about the arm 306 such that the sensors 301A, 301B, 301C may detect airborne particles across the width 203 of the header 200.

As illustrated, the CLSS 300 also includes multiple sensors 302 disposed on each of the row units 204 (e.g., disposed on a deck plate 212 of a particular row unit 204). Each of the sensors 302 may be configured to detect particles and/or MOG impacting portions of the header 200 (e.g., impacting portions of a particular row unit 204). For example, first sensors 302A may be configured to detect particles impacting a first row unit 204A, second sensors 302B may be configured to detect particles impacting a second row unit 204B, and third sensors 302C may be configured to detect particles impacting a third row unit 204C. Each of the sensors 302A, 302B, 302C may be oriented in a direction (e.g., vertical direction) along the vertical axis 144 (e.g., in a direction crosswise to the direction of travel 146) such that the sensors 302 detect particles and/or MOG impacting portions of a particular row unit 204.

As noted above, in certain embodiments, the CLSS 300 may include fewer or more sensors 301, 302 (one, two, four, five, or more), and the sensors 301, 302 may be positioned in different locations and/or oriented in different directions. For example, in some embodiments, the CLSS 300 may include a single sensor 301 configured to detect airborne particles across the width 203 of the header 200. Further, the CLSS 300 may include multiple sensors 302 positioned at various locations on each of the row units 204. For example, in certain embodiments, each row unit 204 may include a first sensor 302 positioned on an upstream portion of a deck plate 212 relative to the direction of travel 146, a second sensor 302 positioned on a downstream portion of a deck plate 212 relative to the direction of travel 146 (e.g., positioned proximate the conveyor 206), a third sensor 302 positioned on a hood 218 of the row unit 204, and a fourth sensor 302 positioned on a divider 202.

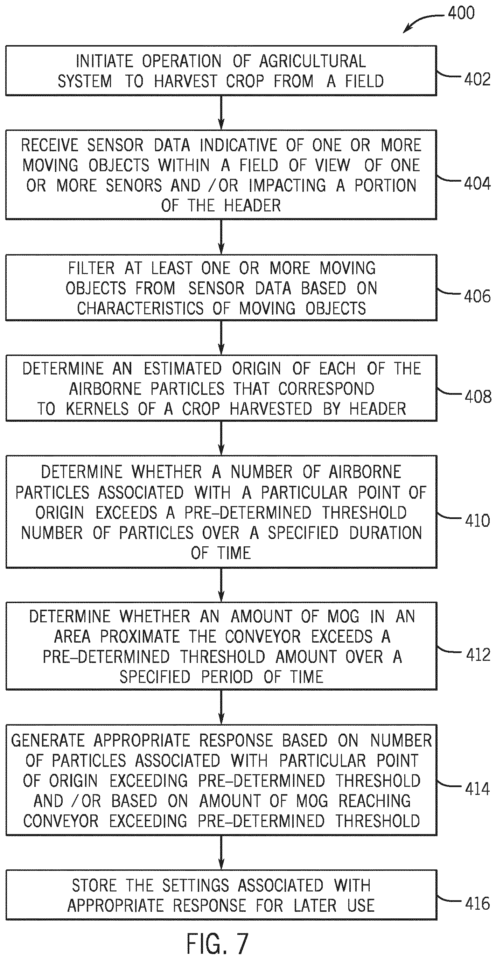

FIG. 7 illustrates a flow chart of an embodiment of a method 400 that may be employed by the control system 350 (e.g., controller 352) to facilitate operation of the header 200 of the agricultural system 100 based on data captured by the sensors 301, 302. Although the following description of the method 400 is described in a particular order, it should be noted that the method 400 is not limited to the depicted order; and instead, the method 400 may be performed in any suitable order. In addition, although the controller 352 is described as performing the method 400, it should be understood that one or more steps of the method 400 may be performed by any suitable computing device and the data may be communicated to the controller 352, thereby enabling the controller 352 to perform the steps described herein.

Referring now to FIG. 7, the controller 352, at block 402, may initiate operation of the agricultural system 100 to harvest crop from a field. For example, the controller 352 may receive an instruction from an operator to initiate operation of the agricultural system 100, thereby enabling the agricultural system 100 to traverse a field and harvest crop using the header 200, as described herein.

As the header 200 harvests crop from the field, the controller 352, at block 404, may receive sensor data from the one or more sensors 301, 302 of the CLSS 300. As noted above, the sensor data generated by the one or more sensors 301, 302 may be indicative of one or more moving objects within the field of view of the one or more sensors 301 and/or indicative of one or more moving objects impacting the one or more sensors 302. As discussed herein, the one or more "moving objects" may correspond to particles, kernels of a crop, portions of a crop (e.g., stalk), moving components of the header 200, components of the field moving within a threshold margin of the ground speed of the agricultural system 100, components of the header 200 moving with a relative speed of zero (relative to the header 200), or any combination thereof. For example, while an approaching crop may be generally stationary as the header 200 approaches during a harvesting operation, the one or more sensors 301 may determine that the approaching crop is a "moving object" approaching the header 200 with a speed substantially similar to the ground speed of the agricultural system 100. In some embodiments, the controller 352 may adjust a height and/or orientation of the one or more sensors 301 based on data received from one or more of the sensors 301. For example, upon determining that a greater number of airborne particles are detected by a first sensor 301A set at a first height, the controller 352 may adjust the height of other sensors 301B-301N employed by the APSS 300 to match the height of the first sensor 301A, thereby enabling the sensors 301 to detect an increased amount of airborne kernels in the area proximate the header 200.

At block 406, using one or more algorithms (e.g., machine learning and/or artificial intelligence models), the controller 352 may filter out at least one of the one or more of the moving objects detected by the one or more sensors 301 based on certain characteristics of the moving objects. For example, as noted above, the sensors 301 may be configured to capture data associated with one or more moving objects that correspond to kernels of a crop that have been dislodged from a respective portion of a crop (e.g., ear of corn) as a result of engagement with the pair of deck plates 212 and/or impact with the pair of deck plates 212. The controller 352 may include data stored in the memory 356 indicative of an average size of a kernel of a crop, and the controller 352 may be configured to filter out moving objects that are outside a threshold range of sizes that may correspond to a kernel of a crop. For example, a corn kernel may have an average size of 10-20 mm. Accordingly, the controller 352 may be configured to filter out moving objects that have a size less than 10mm or greater than 20mm, as such moving objects likely do not correspond to kernels of a crop.

Further, the controller 352 may be configured to filter out moving objects based on the speed at which the objects are moving through the field of view of the one or more sensors 301. For example, the agricultural system 100 may be operating to harvest crop at a specific ground speed (e.g., 5 kilometers per hour) which may be communicated to the controller 352. As the agricultural system 100 (and thus the header 200) traverses the field to harvest crop, objects moving through the field of view of the one or more sensors 301 at a speed that has less than a threshold deviation (e.g., less than 2 kilometers per hour of deviation) from the ground speed of the agricultural system 100 may correspond to objects within the field (e.g., objects being passed in the field; stalks of corn planted in the field). In contrast, airborne particles corresponding to kernels of a crop may move at significantly higher speeds (e.g., 10-20 kilometers per hour). Accordingly, the controller 352 may filter out the objects moving through the field of view of the one or more sensors 301 at a speed within a threshold deviation of the ground speed of the agricultural system 100 as they likely do not correspond to airborne kernels that have been dislodged from a respective crop. Similarly, the controller 352 may filter out objects having a relative speed of zero or near zero, as these objects may correspond to components of the header 200. In some embodiments, the controller 352 may also filter out certain moving objects based on input data and/or historical data. For example, the controller 352 may be aware that the stalk rollers 210 are rotating at a particular speed. Accordingly, the controller 352 may filter out moving objects that have a speed substantially similar (e.g., less than a threshold amount of deviation) to the speed at which the stalk rollers 210 are rotating, as such data may be associated with the stalk rollers 210, and may not be indicative of airborne kernels that have been dislodged from a respective crop.

Further still, the controller 352 may be configured to filter out moving objects based on the force at which the objects impact the one or more sensors 302. For example, the controller 352 may store historical data indicative of an average force at which different portions of a crop impact the deck plates 212. That is, the controller 352 may store data indicating that stalks impacting the sensors 302 impart a first force (e.g., first range of forces) on the sensors 302, while kernels impacting the sensors 302 impart a second force (e.g., second range of forces) on the sensors 302. As such, the controller 352 may filter out moving objects based on the force of a particular moving object not being within the first range of forces associated with stalks impacting the sensors 302 or the second range of forces associated with kernels impacting the sensors 302.

Upon filtering the moving objects that do not correspond to airborne kernels of a crop in the area proximate the header 200 and/or that do not correspond to stalk or kernels of a crop impacting the header 200, the controller 352 may, at block 408, estimate an origin of each of the airborne particles in the area 310 proximate the header 200 that correspond to kernels of a crop that have been dislodged from a respective crop harvested by the header 200. For example, as noted above, each of the one or more sensors 301 may be radar sensors configured to collect data indicative of a velocity (e.g., vector, direction, and speed) of a particular airborne particle. Using this data, the controller 352 may be configured to determine from which row unit 204 the airborne particle originated. In certain embodiments, the controller 352 may compare this data to the data collected by the sensors 302 disposed on each of the row units 204. For example, upon estimating that a particular airborne particle originated from a first row unit 204, the controller 352 may review data collected by the sensors 302 disposed on the first row unit 204 to confirm whether a particular particle impacted the first row unit 204 prior to the airborne particle being detected by the sensors 301.

Subsequently, at block 410, the controller 352 may determine whether a number of airborne particles that correspond to kernels of a crop and that are associated with a particular point of origin (e.g., associated with a particular row unit 204) is greater than a threshold number of particles over a time period. For example, a manufacturer or an operator may set the threshold at 10 airborne particles associated with a particular row unit 204 over a 5 minute duration of time. Accordingly, as the header 200 harvests crop from the field, if the controller 352 determines that the number of detected airborne particles that correspond to kernels of a crop and that originate from a particular row unit 204 is greater than 10 particles over the 5 minute duration of time, the controller 352 may generate an appropriate response, as described in greater detail herein. Further, the machine learning models may record the data generated by the one or more sensors 301 to identify patterns and/or characteristics that facilitate the filtering process. For example, upon determining that certain particles moving at a particular speed and/or having a particular size do not correspond to kernels of a crop, the machine learning models may update such that the controller 352 may filter out such objects in future harvesting operations.

At block 412, the controller 352 may determine whether an amount of material other than grain (MOG) (e.g., stalk of a crop) in an area proximate the conveyor 206 exceeds a threshold amount. For example, as noted above, one or more of the sensors 302 may be positioned on the deck plates 212 and/or the hood 218 in an area proximate the conveyor 206 (e.g., within a threshold distance of the conveyor 206). Thus, as the sensors 302 collect data indicative of MOG impacting the sensors 302, the controller 352 may generate an appropriate response, as described in greater detail herein. For example, a manufacturer or an operator may set a zero tolerance for MOG reaching the conveyors 206. Accordingly, as the header 200 harvests crops from the field, if the controller 352 determines that MOG is impacting the sensors 302 within a threshold distance of the conveyor 206, the controller 352 may generate an appropriate response to reduce the amount of MOG impacting the sensors 302 that are positioned within a threshold distance of the conveyor 206. In this way, an amount of MOG reaching the conveyor 206 may be reduced, thereby increasing the yield and efficiency associated with harvesting operations.

At block 414, in response to determining that the number of airborne particles that correspond to kernels of a crop and that are associated with a particular point of origin (e.g., associated with a particular row unit 204) exceeds the threshold over the time period, the controller 352 may generate an appropriate response to limit an amount of butt-shelling (e.g., limit a number of airborne particles associated with a particular row unit 204; reduce or block butt-shelling associated with a particular row unit 204) during a harvesting operation. In some embodiments, in response to determining that the number of airborne particles that correspond to kernels of a crop and that is associated with a particular row unit 204 exceeds the threshold over the time period, the controller 352 may adjust the width 215 of the gap 214 between the pair of deck plates 212 of the particular row unit 204 to decrease the amount of butt-shelling occurring during the harvesting operation. That is, the controller 352 may be configured to individually control each of the row units 204 that are associated with an undesirable amount of butt-shelling. For example, the controller 352 may determine that the width 215 of the gap 214 of a particular row unit 204 is such that a portion of the crop having a first diameter may pass through the gap without interference, while a second portion of the crop having a second diameter greater than the first diameter may engage with one or more of the deck plates 212, thereby resulting in undesirable butt-shelling. Accordingly, the controller 352 may determine to decrease the width 215 of the gap 214 between a pair of deck plates 212 associated with a particular row unit 204 such that the width 215 of the gap 214 is less than the first diameter of the crop (e.g., less than the smallest diameter of the crop). In this way, the crop may be prevented or blocked from passing through the deck plates 212 of the particular row unit 204 and instead may be caught by the deck plates 212 and directed toward the conveyor 206 for processing with reduced butt-shelling.

In certain embodiments, the appropriate response may be associated with modifying a speed at which the stalk rollers 210 associated with a particular row unit 204 rotate to direct the stalk and/or other portions of the crop toward the pair of deck plates 212. For example, in response to determining that the number of airborne particles that correspond to kernels of a crop and that is associated with a particular row unit 204 exceeds the threshold over the time period, the controller 352 may decrease the speed at which the stalk rollers 210 rotate. In this way, an impact force between the crop and the pair of deck plates 212 may be decreased, thereby resulting in a decrease of butt-shelling as the crop strikes the pair of deck plates 212 at a reduced speed and/or with a reduced impact force. Further, in certain embodiments, the controller 352 may be configured to proportionally control the angle of attack of a particular row unit 204 based on the speed at which the stalk rollers 212 of the particular row unit 204 are rotating. For example, upon decreasing the speed at which the stalk rollers 212 of a particular row unit 204 are rotating, the controller 352 may correspondingly decrease the angle of attack at which the particular row unit 204 is disposed (e.g., flatten the angle of the row unit relative to the ground surface). Conversely, upon increasing the speed at which the stalk rollers 212 of a particular row unit 204 are rotating, the controller 352 may corresponding increase the angle of attack at which the particular row unit 204 is disposed.

Additionally, at block 414, the controller 352 may generate an appropriate response based on the amount of MOG detected by the sensors 301, 302. For example, in certain embodiments, the controller 352 may determine that a threshold amount of stalk is detected by the sensors 301 in the area 310 proximate the header 200. A threshold amount of stalk detected by the sensors 301 may indicate that the width 215 of the gap 214 is too small such that both the stalk and the crop are prevented or blocked from passing through the deck plates 212. Accordingly, the controller 352 may adjust the width of the gap 214 (e.g., increase the width 215 of the gap 214) associated with a particular row unit 204 such that the stalk may pass through the gap 214 while the crop is prevented or blocked from passing through the gap 214.

In certain embodiments, the controller 352 may also determine that a threshold amount of MOG is impacting sensors 302 that are located within a threshold distance of the conveyor 206. A threshold amount of stalk detected by the sensors 302 located within a threshold distance of the conveyor 206 may indicate that the width 215 of the gap 214 is too small and/or a speed of the stalk rollers 212 is too small (e.g., too slow) such that the stalk cannot be processed and directed into the field before impacting the sensors 302 positioned within a threshold distance of the conveyor 206. Accordingly, the controller 352 may adjust the width of the gap 214 (e.g., increase the width 215 of the gap 214) associated with a particular row unit 204 such that the stalk may pass through the gap and be directed into the field before reaching the sensors 302 positioned proximate the conveyor 206. Additionally, or alternatively, the controller 352 may adjust a speed of stalk rollers 212 associated with a particular row unit 204 (e.g., increase a speed of the stalk rollers 212) such that stalk is directed into the field at a faster rate, thereby limiting an amount of stalk from reaching the sensors 302 positioned proximate the conveyor 206. In this way, an amount of MOG (e.g., stalk) reaching the conveyor may be reduced, thereby improving the yield and efficiency associated with a harvesting operation. As noted above, in certain embodiments, upon adjusting a speed at which the stalk rollers 212 associated with a particular row unit 204 rotate, the controller 352 may make a corresponding modification to the angle of attack of the particular row unit 204.

At block 416, the controller 352 may store the modified settings associated with the width 215 of the gap 214 of a particular row unit 204, the speed of the stalk rollers 210 of a particular row unit 204, and/or an angle of attack of a particular row unit 204 for later harvesting operations. In some embodiments, the controller 352 may also generate control signals for the header 200 and/or one or more notifications to send to an operator in response to detecting that one or more modified settings result in increased amounts of butt-shelling. For example, after an increase in the speed at which the stalk rollers 210 associated with a particular row unit 204 rotate, the one or more sensors 301 may detect an increased number of airborne particles originating from the particular row unit 204. Accordingly, the controller 352 may generate the control signals for the header 200 and/or an alarm configured to alert the operator that the recent change resulted in an increase in butt-shelling.

The control signals for the header 200 may return to the previous settings and/or other settings (e.g., based on the settings stored in the memory that are associated with decreased amounts of butt-shelling) and/or the alarm may include a notification with a recommendation to return to the previous settings and/or the other settings. In this way, the controller 352 may provide responsive, dynamic control and/or outputs to limit butt-shelling during harvesting operations. It should be appreciated that in some embodiments, the controller 352 may perform the steps of the method 400 automatically as data is generated by the one or more sensors 301, 302 to limit an amount of butt-shelling occurring on the header 200. For example, in response to determining that a particular set of settings (e.g., rotational speed of the pair of stalk rollers 210, width 215 of the gap 214, ground speed of the agricultural system 100, or any combination thereof associated with a particular row unit 204) results in an increased amount of butt-shelling for a particular row unit 204, the controller 352 may retrieve previous settings that are associated with decreased amounts of butt-shelling (and stored in the memory 356) to operate the header 200. Further, during operation, the controller 352 may dynamically determine optimal settings to decrease an amount of butt-shelling, and may adjust the operating parameters of the header 200 and/or agricultural system 100 accordingly (e.g., without receiving approval input from an operator), thereby automatically reducing an amount of butt-shelling and increasing yield from a harvesting operation.

Additionally, it should be appreciated that while the controller 352 is described above as controlling individual row units 204 based on data received from the sensors 301, 302, in certain embodiments, the controller 352 may be configured to generate an appropriate response for one or more groups of row units 204. For example, in certain embodiments, the controller 352 may be unable to determine which particular row unit 204 is associated with an increased amount of butt-shelling and/or an increased amount of MOG reaching the conveyors 206. However, using the data from the sensors 301, 302, the controller 352 may determine that a specific region (e.g., group of row units 204) is associated with an increased amount of butt-shelling and/or an increased amount of MOG reaching the conveyors 206. Accordingly, using the data from the sensors 301, 302, the controller 352 may control row units 204 of the specific region associated with the increased amount of butt-shelling and/or MOG reaching the conveyors 206. In this way, the controller 352 may control multiple row units 204 (e.g., row units belonging to the same group) simultaneously. For example, the controller 352 may be configured to control a first group (e.g., first section, left section) of two or more row units 204, a second group (e.g., second section, center section) of two or more row units 204, and/or a third group (e.g., third section, right section) of two or more row units 204 based on the signals from the respective row units 204 of each group and/or section. Thus, in certain embodiments, an appropriate response may be generated for each group of row units 204 associated with an increased amount of butt-shelling and/or an increased amount of MOG reaching the conveyor 206. In this way, a reduced amount of actuators may be employed to control the respective row units 204, thereby decreasing costs associated with the manufacture and assembly of the header 200.

## Claims

1. A header (200) for an agricultural system (100), **characterized in that** the header (200) comprises:
a plurality of row units (204) distributed across a width (203) of the header (200);
one or more first sensors (301) coupled to the header (200) and configured to collect data indicative of a first detected set of a plurality of objects in an area (310) proximate the header (200);
one or more second sensors (302) coupled to the header (200) and configured to collect additional data indicative of a second detected set of the plurality of objects impacting one or more components of the header (200); and
a controller (352) comprising a memory (356) and a processor (354), wherein the controller (352) is configured to:
receive (404) the data from the one or more first sensors (301) and the additional data from the one or more second sensors (302); and
process the data and the additional data to estimate a respective point of origin for each object in the first detected set and the second detected set of the plurality of objects in the area (310) proximate the header (200).

2. The header (200) of claim 1, **characterized in that** the one or more first sensors (301) are oriented such that a field of view (311) of the one or more first sensors (301) comprises the area (310), and the area (310) is above the header (200) relative to a soil surface (101).

3. The header (200) of any of claims 1 to 2, **characterized in that** at least one of the one or more second sensors (302) is positioned within a threshold distance of a conveyor (206) of the header (200).

4. The header (200) of any of claims 1 to 3, **characterized in that** the controller (352) is configured to process the data and the additional data to estimate the respective point of origin of each object of the first detected set of the plurality of objects via:
identifying (404) one or more respective characteristics of each object in the first detected set of the plurality of objects in the area (310) proximate the header (200); and
filtering (406) out a portion of objects in the first detected set of the plurality of objects based on the one or more respective characteristics of each object in the first detected set of the plurality of objects.

5. The header (200) of any of claims 1 to 4, **characterized in that** each of the plurality of row units (204) comprises a first deck plate (212) and a second deck plate (212), and the first deck plate (212) and the second deck plate (212) are separated from one another by a gap (214) having an adjustable width (215).

6. The header (200) of any of claims 1 to 5, **characterized in that** each of the plurality of row units (204) comprises one or more stalk rollers (210) configured to rotate to direct a crop (250) toward the first deck plate (212) and the second deck plate (212).

7. The header (200) of any of claims 1 to 6, **characterized in that** each of the plurality of row units (204) is disposed at an attack angle relative the soil surface (101), wherein the attack angle is adjustable.

8. The header (200) of any of claims 1 to 7, **characterized in that** the controller (352) is configured to:
determine (408) a number of airborne particles associated with a particular point of origin based on the data and the additional data;
determine (410) whether the number of airborne particles associated with the particular point of origin exceeds a threshold amount over a time period; and
generate (414) an output in response to determining that the number of airborne particles associated with the particular point of origin exceeds the threshold amount over the time period.

9. The header (200) of any of claims 1 to 8, **characterized in that** the particular point of origin corresponds to a row unit (204) of the plurality of row units (204), and wherein the output comprises individually adjusting (414) the adjustable width (215) of the gap (214) associated with the row unit (204).

10. The header (200) of any of claims 1 to 8, **characterized in that** the particular point of origin corresponds to a row unit (204) of the plurality of row units (204), and wherein the output comprises individually adjusting (414) a rotation rate of the stalk rollers (210) associated with the row unit (204).

11. The header (200) of any of claims 1 to 10, wherein the output further comprises proportionally adjusting (414) the attack angle of the row unit (204) based on adjusting (414) the rotation rate of the stalk rollers (210) associated with the row unit (204).

12. The header (200) of any of claims 1 to 11, **characterized in that** each of the one or more first sensors (301) are radar sensors, and wherein each of the one or more second sensors (302) are impact sensors.

13. A method (400) **characterized in that** the method (400) comprises:
operating (402) an agricultural system (100) to harvest crop from a field using a header (200);
receiving (404) sensor data from a first set of sensors (301) mounted on the header (200), wherein the sensor data is indicative of a first detected set of a plurality of objects within a field of view (311) of the first set of sensors (301);
receiving (404) additional sensor data from a second set of sensors (302) mounted on the header (200), wherein the additional sensor data is indicative of a second detected set of the plurality of objects impacting one or more components of the header (200);
determining (408) a number of the plurality of objects that correspond to airborne kernels (254) of a crop (250) based on the sensor data, the additional sensor data, or both;
determining (408) a respective point of origin for each object in the number of the plurality of objects that correspond to the airborne kernels (254) of the crop (250), wherein the respective point of origin corresponds to a particular row unit (204) of the header (200);
determining (410) whether the number of the plurality of objects that correspond to the airborne kernels (254) of the crop (250) and that is associated with the particular row unit (204) exceeds a threshold number; and
generating (414) an output to individually control the particular row unit (204) in response to the number of the plurality of objects that correspond to the airborne kernels (254) of the crop (250) and that is associated with the particular row unit (204) exceeding the threshold number.

14. The method (400) of claim 13, **characterized in that** determining (408) the number of the plurality of objects that correspond to the airborne kernels (254) of the crop (250) and that is associated with the respective point of origin comprises filtering out (406) at least one object of the plurality of objects based on a respective size of the at least one object, a respective speed of the at least one object, or both.

15. The method (400) of any of claims 13 to 14, **characterized in that** the output comprises decreasing (414) a width (215) of a gap (214) between respective pairs of deck plates (212) associated with the particular row unit (204), reducing (414) a rotational speed of one or more stalk rollers (210) associated with the particular row unit (204), adjusting (414) an angle of attack of the particular row unit (204), or any combination thereof.
